# EUROPÄISCHE PATENTSCHRIFT

(11) **EP 2 087 986 B1**
(45) Veröffentlichungstag und Bekanntmachung des Hinweises auf die Patenterteilung: **01.12.2010**
(21) Anmeldenummer: 09151251.7
(22) Anmeldetag: 23.01.2009
(51) Int. Cl.: B29C 45/00, E01B 9/68

(54) **Spritzguss- oder Spritzpress-Unterlegplatte oder -matte für Schienen sowie Verfahren zur Herstellung derselben**
Injection moulded or injection pressed underlay board or mat for rails and method for producing same
Cale ou mât d'épaisseur pour rails moulée par injection ou par injection-compression et son procédé de fabrication

(30) Priorität: 05.02.2008 DE 102008007495
(43) Veröffentlichungstag der Anmeldung: 12.08.2009
(73) Patentinhaber: Semperit Aktiengesellschaft Holding, 1031 Wien (AT)
(72) Erfinder: Mießbacher, Herwig, 8734 Großlobming (AT); Zörnpfenning, Reinhard, 2620 Neunkirchen (AT); Waitzbauer, Kurt, 2630 Ternitz (AT)
(74) Vertreter: Bauer, Clemens

(56) Entgegenhaltungen:
- EP-A- 0 393 432
- WO-A-00/30830
- WO-A-90/08224
- GB-A- 2 114 635
- MICHAELI W ET AL: "BINDENAHTPROBLEME SYSTEMATISCH LOESEN" PLASTVERARBEITER, HUETHIG GMBH, HEIDELBERG, DE, Bd. 47, Nr. 6, 1. Juni 1996 (1996-06-01), Seite 82/83, XP000598614 ISSN: 0032-1338
- "FORMTEILFEHLERN AUF DER SPUR" PLASTVERARBEITER, HUETHIG GMBH, HEIDELBERG, DE, Bd. 49, Nr. 2, 1. Februar 1998 (1998-02-01), Seite 76/77, XP000767432 ISSN: 0032-1338

## Beschreibung

Die Erfindung betrifft eine als Unterlegplatte oder -matte für Schienen dienende Zwischenlage, die zwischen dem Schienenunterbau bzw. den Schwellen und der Schiene insbesondere zur elastischen "Abfederung" der Schiene verwendet wird. Derartige Platten werden im Spritzguss- oder Spritzpressverfahren hergestellt; sie bestehen nach der Fertigstellung aus elastomerem oder gummielastischem Material und können Laschen aufweisen, die von den Eckbereichen nach außen abstehen.

EP 0 393 432 A2 zeigt ein Befestigungssystem für Schienen welches Feder- oder Klemmelemente aus Polyurethan am Schienenfuß aufweist, die eine erhöhte Druckfestigkeit und Druckverformbarkeit aufweisen. Dieses Dokument offenbart die Merkmale des Oberbegriffs der Ansprüche 1 und 4.

Bei einem bekannten Verfahren zur Herstellung solcher Unterlegplatten oder - matten wird Spritzmasse so von der Seite meistens "punktförmig" in die Spritzform für die Platte eingespritzt, dass sich die Anspritzöffnung in die Spritzform im Bereich des Randes der Platte befindet. Nach dem Spritzen wird die Platte aus der Spritzform wieder entformt. Dabei ist es bekannt, Vulkanisationsmaßnahmen zu ergreifen oder auf andere Weise, dafür zu sorgen, dass die Platte nach oder schon vor dem Entformen ihre elastomeren oder gummielastischen Eigenschaften aufweist. In bestimmten Fällen ist es vorteilhaft, dass die Platte bestimmte Festigkeitseigenschaften in einer Vorzugsrichtung aufweist. Daher ist die Art des Materials sowie die Wanddicke der Platte und gegebenenfalls von Erhöhungen auf der Platte und/oder unter der Platte so auszuwählen, dass die Prüfungsbedingungen insbesondere hinsichtlich der Zug- und Reißfestigkeit eingehalten werden.

Der Erfindung liegt die Aufgabe zu Grunde, die Platte derart auszubilden, dass die Prüfungsbedingungen hinsichtlich der Zugfestigkeit, insbesondere der "spezifischen Bruchfestigkeit" mit möglichst geringem Materialverbrauch, also geringerer Plattendicke erreicht werden können. Dazu soll das Herstellungsverfahren möglichst einfach und kostengünstig ausgestaltet sein.

Die Erfindung hinsichtlich der Platte bzw. Matte ist im Patentanspruch 1 und hinsichtlich des Herstellungsverfahrens im Patentanspruch 4 ekennzeichnet. Weitere Ausbildungen der Erfindung sind in Unteransprüchen beansprucht.

Im Übrigen ist eine besondere Ausbildung der Erfindung anhand der Zeichnung im Folgenden näher erläutert.

Erfindungsgemäß ist eine Spritzguss- oder Spritzpress-Unterlegplatte oder -matte für Schienen aus elastomerem oder gummielastischem Material vorgesehen, welche sich beim Spritzen der Spritzmasse ergebende Fließlinien aufweist, die um zumindest eine Anspritzstelle oder ein Angussmundstück verlaufen, wobei die Fließlinien im Wesentlichen parallel zur Prüfrichtung für die Festigkeitsprüfung angeordnet sind. Es hat sich gezeigt, dass die sich beim Spritzen der Spritzmasse ergebenden Fließlinien innerhalb der Platte einen wesentlichen Einfluss auf die physikalischen Eigenschaften (z.B. Reißfestigkeit) des Produkts bei definierter Laufrichtung haben. Es hat sich nämlich gezeigt, dass sich die Fließlinien bei Punkteinspritzung im Wesentlichen konzentrisch um die Anspritzstelle anordnen. Je mehr Fließlinien die Richtung der vorzunehmenden Prüfung queren, desto stärker reduziert sich die Festigkeit der Platte. Es empfiehlt sich daher, die Fließlinien im Wesentlichen in Prüfrichtung des Produkts anzuordnen. Die erfindungsgemäße Platte kann somit insbesondere als Schienenunterlegplatte ausgebildet sein. Als Material dient hierfür zweckmäßigerweise ein elastomeres oder elastisches oder elasto-plastisch verformbares Material, wie z. B. Gummi. Zweckmäßigerweise ist die Platte aus einem Spritzguss- oder Spritzpressverfahren hergestellt, bei welchem die Spritzmasse in eine Form eingeführt bzw. eingespritzt bzw. zugeführt wird. Dies erfolgt über zumindest eine entsprechende Anspritzstelle oder ein Angussmundstück. Es versteht sich, dass auch eine Vielzahl von Anspritzstellen oder Angussmundstücken vorgesehen sein kann. Diese können besonders zweckmäßigerweise an demselben Rand bzw. derselben Kante der Platte vorgesehen sein. Es versteht sich, dass die Anspritzstellen auch an-gegenüberliegenden Rändern bzw. Kanten der Platte angeordnet sein können. Beim Einspritzen der Spritzmasse ergeben sich Fließlinien um die Anspritzstelle herum. Diese sind vorteilhafterweise im Wesentlichen parallel zur Prüfrichtung für die Festigkeitsprüfung angeordnet. In anderen Worten sind die Fließlinien derart ausgerichtet, dass diese im Wesentlichen parallel zu einem Rand der Platte angeordnet sind, der sich im Wesentlichen in diejenige Richtung erstreckt, in der die gewünschten Festigkeitseigenschaften zu erreichen sind.

Zweckmäßigerweise ist die Platt mit noppen- oder stegartigen Erhöhungen und/oder Rillen versehen, die sich auf der Oberfläche der Platte im Wesentlichen gleichmäßig verteilen.

Vorteilhafterweise ist die Platte aus einem Compound oder Verschnitt aus NR oder SBR bzw. EPDM mit Füllstoffen aus einer Mischung aus Russen und anorganischen Materialien ausgebildet.

Die Platte bzw. Matte sollte aus elastischem Werkstoff auf Basis von NR, SBR, BR, EPDM, NBR, CR, PUR oder Gemischen daraus bzw. Versatz bestehen. Bevorzugt wird folgende Spritzmasse verwendet:

Ein Compound bzw. Verschnitt aus NR oder SBR bzw. EPDM gefüllt mit einer Mischung aus Rußen und anorganischen Füllstoffen.

Erfindungsgemäß ragt die Anspritzstelle von einem Rand der Platte hervor und weist in den äußeren Bereichen eine größere Dicke als im mittleren Bereich auf. Die Anspritzstelle ragt somit quer, insbesondere im Wesentlichen rechtwinklig von dem Rand hervor, an welchem diese angeordnet ist. In Erstreckungsrichtung des Randes gesehen, weist die Anspritzstelle in den Endbereichen bzw. äußeren Bereichen bzw. vorderen und hinteren Bereichen eine größere Dicke auf als im mittleren Bereich. Die Dicke ist hierbei im Wesentlichen in Richtung der Dicke der Matte gesehen definiert. In anderen Worten verjüngt sich die Anspritzstelle von deren äußeren Bereichen zu deren mittleren Bereich hin. Die Verjüngung kann hierbei konstant oder nicht konstant erfolgen. So kann beispielsweise der äußere Bereich als Stufe ausgebildet sein, der eine größere Dicke aufweist. Der mittlere Bereich kann sich an die Stufe anschließen und eine konstante Dicke aufweisen.

Weiterhin erfindungsgemäß ist ein Verfahren zur Herstellung einer als Zwischenlage zwischen Schiene und Schienenunterbau bzw. Schwelle dienenden Unterlegplatte oder -Matte vorgesehen, bei welchem die Platte in einer Spritzform durch Spritzgießen bzw. Spritzpressen von Spritzmasse gespritzt und anschließend aus der Spritzform entformt wird, und bei welchem die Spritzmasse mindestens durch eine Anspritzöffnung im Bereich des Plattenrandes in die Spritzform eingespritzt wird, wobei die Spritzmasse durch mindestens eine Anspritzöffnung eingespritzt wird, die sich im Bereich desjenigen Randes der Platte befindet, der im Wesentlichen parallel zu der Richtung verläuft, in der die gewünschten Festigkeitseigenschaften zu erreichen sind. Vorzugsweise wird die Spritzmasse in die Spritzform durch mindestens eine Spritzöffnung eingespritzt, die sich im Bereich desjenigen Randes der Platte befindet, der im Wesentlichen parallel zu der Richtung verläuft, in der die gewünschten Festigkeitseigenschaften gemäß der Prüfrichtung zu erzielen sind. Dabei ist es zweckmäßig, die Spritzmasse durch Anspritzöffnungen in die Spritzform einzuspritzen, die sich an dem in Plattenquerrichtung verlaufenden Rand befinden. Die Spritzmasse strömt dann im Wesentlichen quer zur Prüfrichtung. Die Prüfrichtung bzw. Richtung, in der die gewünschten Festigkeitseigenschaften zu erreichen sind, kann somit zweckmäßigerweise die Richtung erhöhter Zug- und/oder Reißfestigkeit sein. In anderen Worten weist die nach dem erfindungsgemäßen Verfahren hergestellte Platte in dieser Richtung bzw. im Wesentlichen parallel zu dieser Richtung eine höhere spezifische Bruchfestigkeit auf als quer zu dieser Richtung.

Vorteilhafterweise wird die Spritzmasse durch mindestens eine Anspritzöffnung in die Spritzform gespritzt, die sich an dem in Plattenquerrichtung verlaufenden Rand befindet.

Besonders bevorzugt ist es, wenn die Spritzmasse nicht durch eine Anspritzöffnung, sondern durch mehrere Anspritzöffnungen derart in die Spritzform eingespritzt wird, dass die Spritzrichtung aller Anspritzöffnungen jeweils im Wesentlichen parallel und in Querrichtung der Platte verläuft.

Weiterhin erfindungsgemäß ist die Anspritzöffnung derart ausgelegt, dass in deren äußeren Bereichen eine größere Menge von Spritzmasse zugeführt wird als in deren mittlerem Bereich. Die Anspritzöffnung kann daher vorteilhafterweise im Querschnitt eine im Wesentliche längliche Konfiguration aufweisen, deren äußere Bereiche eine größere Dicke aufweisen als deren mittlerer Bereich, sodass in den äußeren Bereichen der Anspritzöffnung eine größere Menge an Spritzmasse durchgeführt wird als im mittleren Bereich. Alternativ können jedoch auch die Druckverhältnisse vor der Anspritzöffnung derart gestaltet sein, dass die Fließgeschwindigkeit in den äußeren Bereichen der Anspritzöffnung höher als in deren mittleren Bereich ist. Auch hierdurch wird eine größere Mengenzufuhr von Spritzmasse im äußeren Bereich der Anspritzöffnung gewährleistet.

Die viskose bzw. flüssige Spritzmasse kann in der Spritzform vulkanisiert werden.

Ein Ausführungsbeispiel der Erfindung ist anhand der folgenden Zeichnung näher erläutert. Dabei zeigen
- Figur 1:: eine Unterlegplatte bekannter Art;
- Figur 2:: eine Unterlegplatte der erfindungsgemäßen Art, die nach dem erfin- dungsgemäßen Verfahren hergestellt ist,
- Figur 3:: Diagramme der Zugfestigkeiten nach "ultimate tensile strength" (UTS) in MPa dreier unterschiedlichen Anspritztechniken in Abhängigkeit von der Lage der Anspritzöffnungen in Längsrichtung;
- Figur 4:: eine alternative Ausführung und
- Figur 5:: eine perspektivische Querschnittsansicht einer Anspritzöffnung einer bevorzugten Ausführungsform der Erfindung.

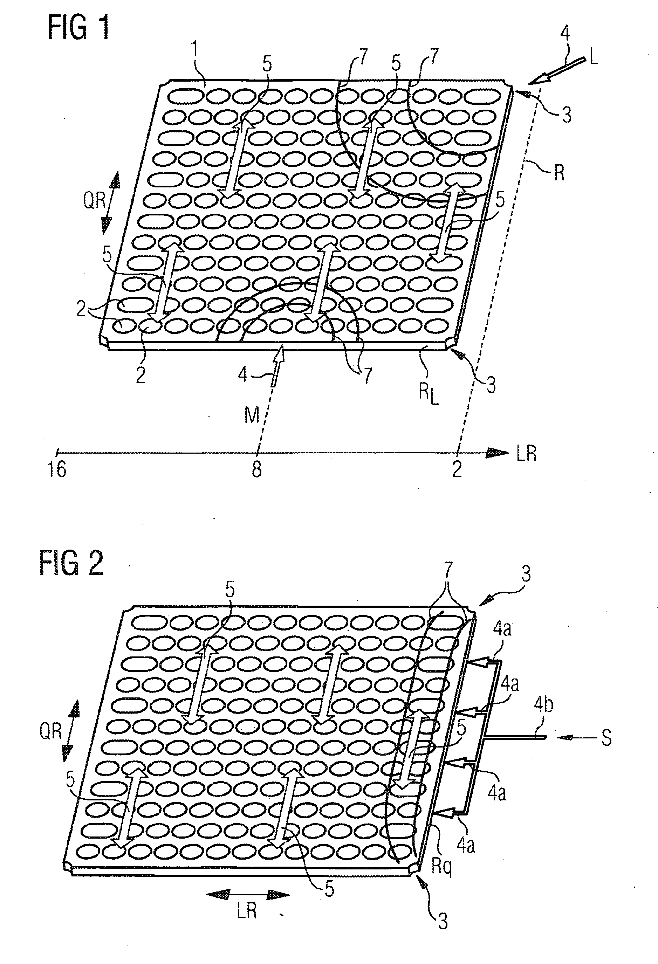

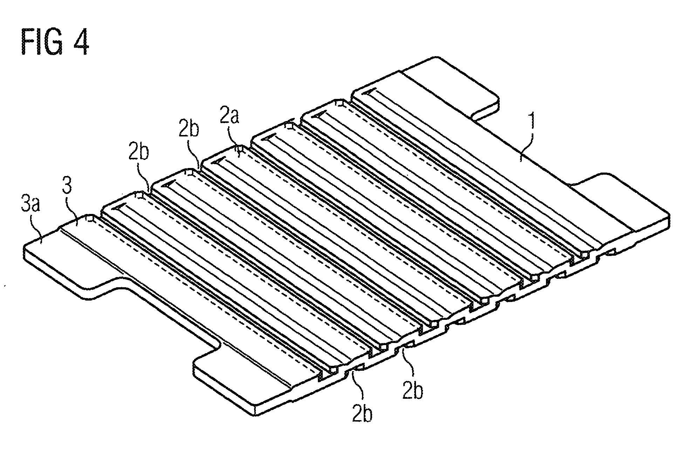

Die Unterlegplatte 1 gemäß Figur 1 besteht aus Gummi; sie weist nach oben abstehende noppenartige Erhöhungen 2 auf; auf diese kann aber auch verzichtet werden. Auch stegartige Erhöhungen 2a gemäß Figur 4 oder ebene Oberflächen sind möglich.

Bei bekannten Verfahren wird die Spritzmasse entweder durch eine mittig (M) in Längsrichtung LR angesetzte Anspritzöffnung 4 oder eine im Eckbereich 3 angeordnete Anspritzöffnung 4 in die Spritzform eingespritzt, aus der die Platte 1 nach Fertigstellung entformt wird. Es hat sich gezeigt, dass sich im Wesentlich konzentrisch um die Anspritzöffnungen 4 sogenannte Fließlinien 7 bilden. Wenn die vorzunehmenden Festigkeitsprüfungen in Querrichtung QR der Platte 1 entsprechend den Prüfrichtungspfeilen 5 vorgenommen werden, queren bzw. kreuzen diese Prüflinien 5 derartige Fließlinien 7.

Im Unterschied dazu wird bei der Erfindung die Spritzmasse gemäß Figur 2 von der Seite S, d.h. an dem in Querrichtung QR verlaufenden Rand Rq eingespritzt. Von einem zentralen Spritzmassenzuführungskanal 4b zweigen Seitenkanäle ab, so dass bei diesem Beispiel insgesamt vier parallel angeordnete Anspritzöffnungen 4a am Querrand Rq angeordnet sind und Spritzmasse im Wesentlichen in Längsrichtung LR in die Spritzform einspritzen. Dabei bilden sich die Fließlinien 7 im Wesentlichen parallel zu den Prüfrichtungen 5, so dass sich praktisch keine oder nur sehr wenige Stellen ergeben, bei denen sich Fließlinien 7 und Prüfrichtungen 5 "kreuzen". Es können die vier einzelnen Anspritzöffnungen auch zu einem ausgeformten Angussmundstück zusammengefasst werden. Dabei ist das Angussmundstück so gestaltet, dass die Spritzmasse möglichst gleichmäßig über die Plattenbreite verteilt wird.

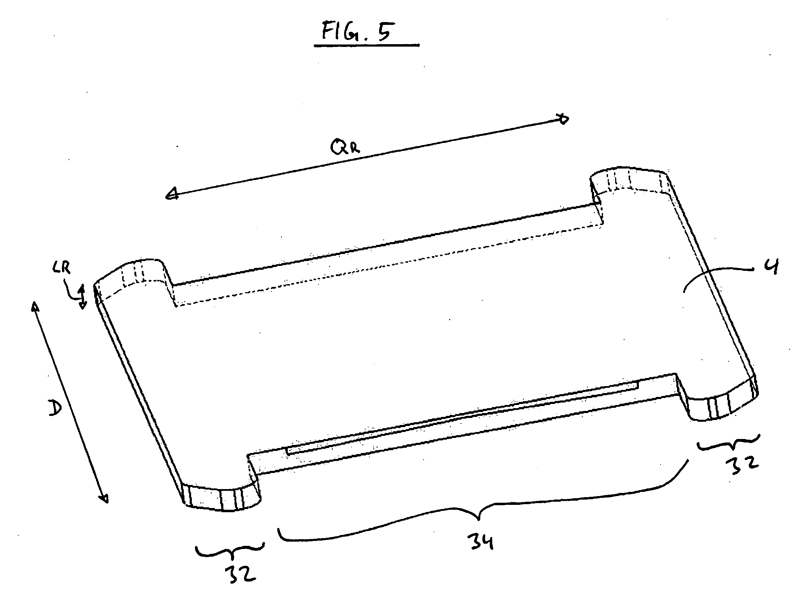

In Figur 5 ist eine bevorzugte Ausführungsform einer Anspritzstelle an einem Rand der Platte dargestellt. Die Anspritzstelle ragt im Wesentlichen in Längsrichtung LR von dem sich in Querrichtung QR erstreckenden Querrand Rq hervor. Hierbei ist die Anspritzstelle im Wesentlichen länglich in Richtung der Querrichtung ausgebildet. Die Anspritzstelle weist zwei gegenüberliegende bzw. entgegengesetzte äußere Bereiche 32 auf. Die äußeren Bereiche 32 weisen eine größere Dicke D auf als der zwischen den äußeren Bereichen 32 angeordnete mittlere Bereich 34.

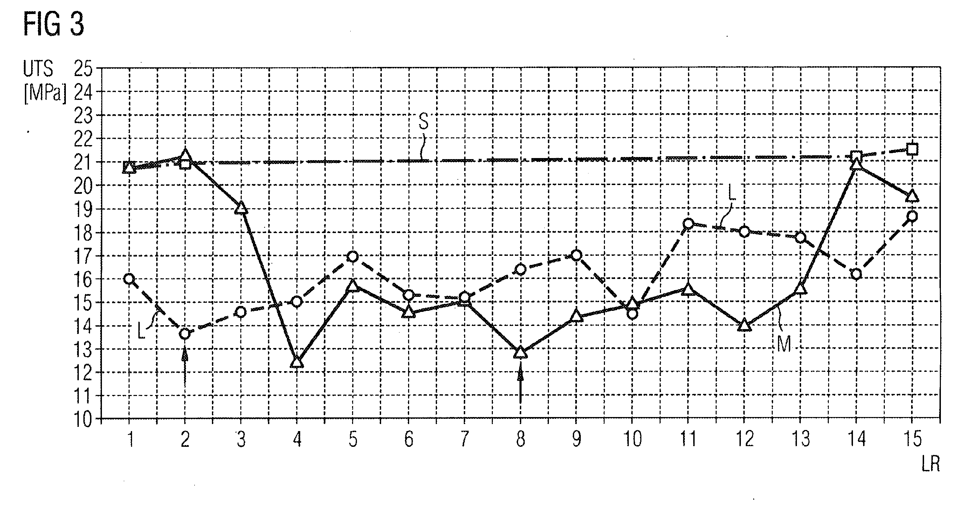

Der wesentliche Vorteil der Erfindung und des erfindungsgemäßen Verfahrens wird anhand der Figur 3 verdeutlicht. Dabei sind die Festigkeitseigenschaften (UTS) in Abhängigkeit von den Positionen 1 bis 15 in Längsrichtung LR für den Fall dargestellt, dass die Prüfrichtungen 5 gemäß Figuren 1 und 2 in Querrichtung QR, d.h. quer zur Längsrichtung LR verlaufen.

Die in durchgezogenen Linien abgebildete Kurve M entspricht den Verhältnissen, wenn die Anspritzöffnung 4 mittig, d. h. in der Mitte M, am in Längsrichtung verlaufenden Rand RI angeordnet ist. Dabei zeigt sich, dass an der Position 8, d.h. im Bereich der Mitte M, eine erhebliche Verminderung der Festigkeit festzustellen ist.

Bei der in unterbrochenen Linien dargestellten Kurve L sind die Verhältnisse für die Festigkeit bei Anordnung der Anspritzöffnung 4 am Rand R der Lasche 4 - Position L gemäß Figur 1 - angegeben. In diesem Fall stellt sich im Bereich 2 in Längsrichtung LR, d. h. im Einspritzbereich, die deutlichste Verminderung der Festigkeit ein.

Wird dagegen erfindungsgemäß entsprechend Figur 2 vom in Querrichtung verlaufenden Rand Rq ausgehend, und zwar durch vier parallel angeordnete Anspritzöffnungen 4a bzw. das zusammengefasste Angussmundstück, Spritzmasse in die Spritzform eingespritzt, dann bleiben die Festigkeiten gemäß der strichpunktierten Kurve S im Wesentlichen konstant. Es wird daher optimale Festigkeit erreicht, und es kann eine erhebliche Materialmenge eingespart werden, um insgesamt die gleiche Zugfestigkeit wie bei den Kurven L und M zu erreichen. Abgesehen von dieser Materialeinsparung wirkt sich auch die Vergleichmäßigung der Zugfestigkeit entlang des Längsrandes RI günstiger aus.

Gemäß Figur 4 weist die als Schienenzwischenlage dienende Unterlegplatte 1 keine noppenartigen, sondern stegartige Erhöhungen 2a auf, die mit parallelen Rillen 2b abwechseln. An die Eckbereiche 3 sind Laschen 3a angeformt.

## Patentansprüche

1. Spritzguss- oder Spritzpress-Unterlegplatte oder -matte für Schienen aus elastomerem oder gummielastischem Material, mit sich beim Spritzen der Spritzmasse ergebenden Fließlinien (7), welche um zumindest eine Anspritzstelle (4) oder Angussmundstück verlaufen,
**dadurch gekennzeichnet,**
**dass** die Fließlinien (7) im Wesentlichen parallel zur Prüfrichtung (5) für die Festigkeitsprüfung der Platte angeordnet sind,
wobei die Anspritzstelle (4) von einem Rand (Rq) der Platte hervorragt und in den äußeren Bereichen eine größere Dicke als im mittleren Bereich aufweist.

2. Platte nach Anspruch 1, wobei die Platte (1) mit noppen- oder stegartigen Erhöhungen (2, 2a) und/oder Rillen (2b) versehen ist, die sich auf der Oberfläche der Platte (1) im Wesentlichen gleichmäßig verteilen.

3. Platte nach Ansprüchen 1 oder 2, wobei die Platte (1) aus einem Compound oder Verschnitt aus NR oder SBR bzw. EPDM mit Füllstoffen aus einer Mischung aus Rußen und anorganischen Materialien besteht.

4. Verfahren zur Herstellung einer als Zwischenlage zwischen Schiene und Schienenunterbau bzw. Schwelle dienenden Unterlegplatte oder -matte, bei dem die Platte (1) in einer Spritzform durch Spritzgießen bzw. Spritzpressen von Spritzmasse gespritzt und anschließend aus der Spritzform entformt wird, bei dem die Spritzmasse mindestens durch eine Anspritzöffnung (4, 4a) im Bereich des Plattenrandes (R) in die Spritzform eingespritzt wird, **dadurch gekennzeichnet, dass** die Spritzmasse durch mindestens eine Anspritzöffnung (4, 4a) eingespritzt wird, die sich im Bereich desjenigen Randes (Rq) der Platte (1) befindet, der im Wesentlichen parallel zu der Richtung verläuft, in der die gewünschten Festigkeitseigenschaften, wie erhöhte Zugfestigkeit, erhöhte Reißfestigkeit und/oder höhere spezifische Bruchfestigkeit zu erreichen sind, wobei die Anspritzöffnung (4a) derart ausgelegt ist, dass in deren äußeren Bereichen eine größere Menge von Spritzmasse zugeführt wird als in deren mittleren Bereich.

5. Verfahren nach Anspruch 4, wobei die Spritzmasse durch mindestens eine Anspritzöffnung (4, 4a) in die Spritzform gespritzt wird, die sich an dem in Plattenquerrichtung (QR) verlaufenden Rand (Rq) befindet.

6. Verfahren nach Anspruch 4 oder 5, **dadurch gekennzeichnet, dass** die Spritzmasse derart durch mehrere Anspritzöffnungen (4a) in die Spritzform gespritzt wird, dass die Spritzrichtungen jeweils im Wesentlichen parallel und in Querrichtung (QR) der Platte (1) verlaufen.

## Claims

1. An injection molded or injection pressed underlay board or mat for rails made of an elastomer or rubbery-elastic material having flow lines (7) resulting during the injection of the injection molding mass, which flow lines run around at least an injection point (4) or gate mouthpiece,
**characterized in**
**that** the flow lines (7) are arranged essentially in parallel to the test direction (5) for the strength test of the board,
wherein the injection point (4) projects from an edge (Rq) of the board and in its outer regions has a greater thickness than in its central region.

2. The board according to claim 1, wherein the board (1) is provided with knob- or bar-like elevations (2, 2a) and/or grooves (2b) which are distributed essentially evenly on the surface of the board (1).

3. The board according to claim 1 or 2, wherein the board (1) consists of a compound or blend of NR or SBR or EPDM, respectively, with filler materials from a mixture of soots and inorganic materials.

4. Method of manufacturing an underlay board or mat serving as an intermediate layer between rail and rail substructure and tie, respectively, in which the board (1) is molded in an injection mold by means of injection molding or injection pressing, respectively, an injection molding mass and subsequently is demolded from the injection mold, in which method the injection molding mass is injected at least through an injection opening (4, 4a) in the area of the edge (R) of the board into the injection mold, **characterized in that** the injection molding mass is injected through at least an injection opening (4, 4a) located in the area of that edge (Rq) of the board (1) which runs essentially in parallel to the direction in which the desired strength characteristics such as increased tensile strength, increased tear strength and/or higher specific ultimate strength are to be achieved, wherein the injection opening (4a) is designed such that in its outer regions a larger amount of injecting molding mass is supplied than in its central region.

5. The method according to claim 4, wherein the injection molding mass is injected through at least an injection opening (4, 4a) into the injection mold which is located at the edge (Rq) running in the transverse direction (QR) of the board.

6. The method according to claim 4 or 5, **characterized in that** the injection molding mass is injected through several injection openings (4a) into the injection mold such that the directions of injection run each essentially parallel and in the transverse direction (QR) of the board (1).

## Revendications

1. Cale ou coussin de blocage pour rail, réalisé(e) par moulage-injection ou par pressage-injection, en matériau élastomère ou présentant l'élasticité du caoutchouc, présentant des lignes de flux (7) résultant de l'injection de la masse injectée et s'étendant autour d'au moins un emplacement d'injection (4) ou d'un embout de coulée,
**caractérisé(e) en ce que**
les lignes de flux (7) sont agencées essentiellement parallèlement à la direction de contrôle (5) pour le contrôle de solidité de la cale, l'emplacement d'injection (4) dépasse depuis une bordure (Rq) de la cale et présente dans les régions extérieures une épaisseur plus importante que dans la région médiane.

2. Cale selon la revendication 1, dans laquelle la cale (1) est pourvue de surélévations (2, 2a) analogues à des boutons ou à des barrettes, et/ou de rainures (2b) qui sont essentiellement régulièrement réparties sur la surface de la cale (1).

3. Cale selon les revendications 1 ou 2, dans laquelle la cale (1) est constituée à partir d'un composite ou d'une ébauche de NR ou SBR ou encore EPDM avec des produits de remplissage formés d'un mélange de suie et de matériaux inorganiques.

4. Procédé pour la réalisation d'une cale ou d'un coussin de blocage servant de couche intermédiaire entre des rails et une sous-structure de rail ou traverse, dans lequel la cale (1) est injectée dans un moule d'injection par moulage-injection ou par pressage-injection d'une masse injectée et est ensuite démoulée hors du moule d'injection, dans lequel la masse injectée est injectée dans le moule d'injection au moins via une ouverture d'injection (4, 4a) dans la région de la bordure de la cale (R), **caractérisé en ce que** la masse injectée est injectée via au moins une ouverture d'injection (4, 4a) qui se trouve dans la région de cette bordure (Rq) de la cale (1) qui s'étend essentiellement parallèlement à la direction dans laquelle les propriétés de solidité souhaitées, comme une meilleure résistance à la traction, une meilleure résistance à la déchirure et/ou une meilleure résistance spécifique à la rupture, doivent être atteintes, ladite ouverture d'injection (4a) étant conçue de telle manière qu'une quantité plus importante de masse injectée est admise dans les zones extérieures de l'embouchure que dans sa zone médiane.

5. Procédé selon la revendication 4, dans lequel la masse injectée est injectée dans le moule d'injection via au moins une ouverture d'injection (4, 4a) qui se trouve au niveau de la bordure (Rq) qui s'étend dans la direction transversale de la cale (QR).

6. Procédé selon la revendication 4 5, **caractérisé en ce que** la masse à injecter est injectée dans le moule d'injection via plusieurs ouvertures d'injection (4a) de telle manière que les directions d'injection s'étendent chacune essentiellement parallèlement et en direction transversale (QR) de la cale (1).
